# EUROPÄISCHE PATENTANMELDUNG

(11) **EP 1 733 923 A1**
(43) Veröffentlichungstag der Anmeldung: **20.12.2006**
(21) Anmeldenummer: 05076413.3
(22) Anmeldetag: 14.06.2005
(51) Int. Cl.: B60R 7/00, B60R 7/12, B60R 7/04

(54) **Staubehälter mit Warnweste**

(71) Anmelder: Faurecia Innenraumsysteme GmbH, 76767 Hagenbach (DE)
(72) Erfinder: Gutierrez, Jorge Martin, 8222 Terrassa Barcelona (ES)
(74) Vertreter: Pfenning, Meinig & Partner GbR

(57) **Zusammenfassung**

Die Erfindung betrifft einen Staubehälter (1) mit einer Warnweste (2) und eine Staubehälteranordnung. Erfindungsgemäß beinhaltet der Staubehälter (1) ein zylinderförmiges, an einer Seite mit einem Boden (10) abgeschlossenen Rohr (3) und einen mit dem Rohr (3) verbundenen, die Öffnung des Rohres (3) verschließenden abnehmbaren Deckel (4), wobei die Warnweste (2) sich in einem zusammengerollten Zustand zumindest teilweise innerhalb des Rohres (3) befindet. Die erfindungsgemäße Staubehälteranordnung beinhaltet einen erfindungsgemäßen Staubehälter und eine Halterung (5) zur Aufnahme des Staubehälters (1). Die Erfindung ermöglicht es, Warnwesten (2) in platzsparender und geschützter Weise insbesondere in Fahrzeugen mitzuführen.

## Beschreibung

Die Erfindung betrifft einen Staubehälter mit einer Warnweste und eine Staubehälteranordnung mit einem erfindungsgemäßen Staubehälter.

Warnwesten sind Westen, die mit reflektierenden Elementen ausgestattet sind. Solche Westen sind vorzugsweise für die Verwendung im Straßenverkehr vorgesehen, insbesondere bei schlechten Sichtverhältnissen, wie bei Dunkelheit. Die reflektierenden Elemente der Warnwesten reflektieren z.B. das Licht von nahenden Fahrzeugen und erhöhen damit erheblich die Sichtbarkeit des Trägers solch einer Weste. Solche Warnwesten sind insbesondere sinnvoll für Insassen eines Kraftfahrzeugs, die durch einen Unfall gezwungen werden, das Fahrzeug zu verlassen und sich somit der Gefahr des Straßenverkehrs aussetzen.

Um die Sicherheit der Insassen eines Fahrzeugs im Falle eines Unfalls unter schlechten Sichtverhältnissen zu erhöhen, ist es somit sinnvoll, im Fahrzeug Warnwesten mitzuführen. Üblich jedoch ist, dass solch eine Weste unabhängig von dem Kauf eines Fahrzeugs angeschafft werden muss. Auch existiert für die Aufbewahrung der Warnweste kein entsprechendes Fach, was die Weste vor äußeren Einflüssen schützt, nicht störend für die Insassen ist und trotzdem auf eine einfache Weise zugänglich ist.

Die vorliegende Erfindung hat sich deswegen zur Aufgabe gesetzt, eine Vorrichtung zu schaffen, die es ermöglicht, eine Warnweste geschützt vor äußeren Umwelteinflüssen, in einer platzsparenden und unauffälligen Weise bei guter Zugänglichkeit in einem Fahrzeug mitzuführen, sowie auch eine Vorrichtung zu schaffen, die es ermöglicht, die Warnweste an geeigneten Orten eines Fahrzeugs unterzubringen.

Diese Aufgabe wird durch einen Staubehälter und eine Staubehälteranordnung nach den unabhängigen Ansprüchen gelöst.

Offenbart wird ein Staubehälter mit einer Warnweste, der ein zylinderförmiges, an einer Seite mit einem Boden abgeschlossenen Rohr und einen mit dem Rohr verbunden, die Öffnung des Rohres verschließenden abnehmbaren Deckel aufweist, und die Warnweste sich in einem zusammengerollten Zustand zumindest teilweise innerhalb des Rohres befindet.

Dadurch, dass sich die Warnweste innerhalb des geschlossenen Staubehälters befindet, ist sie vollständig vor äußeren Einflüssen geschützt. Staub und Feuchtigkeit können nicht an die Warnweste dringen und sie somit beschmutzen oder schädigen.

Erfindungsgemäß ist die Warnweste kompakt zusammengerollt. Vorteilhafterweise sind der Innendurchmesser des Rohres und des Deckels, sowie die Länge des Rohres und des Deckels an die Ausmaße der zusammengerollten Warnweste angepasst. Der Innenraum des Staubehälters wird nahezu vollständig durch die Warnweste ausgefüllt. Dadurch nimmt der Staubehälter mit der Warnweste nur einen minimalen Raum ein. Dies ermöglicht es, den Staubehälter platzsparend an beliebigen Orten unterzubringen.

Das Rohr ist mit einem Deckel verschlossen. Um den Deckel sicher auf dem Rohr zu befestigen, können verschiedene Mittel verwendet werden. Beispielweise können Deckel und Öffnung des Rohres so ausgebildet sein, dass der Deckel aufgestülpt werden kann. Eine weitere Möglichkeit ist es, einen Schraubverschluss an der Öffnung des Rohres vorzusehen, auf dem der Deckel aufgeschraubt wird.

Nach dem Öffnen des Deckels kann die Warnweste aus dem Staubehälter entnommen werden.

Der erfindungsgemäße Staubehälter mit Warnweste eignet sich insbesondere zum Mitführen in einem Kraftfahrzeug. Beispielsweise kann er im Kofferraum oder im Innenraum des Kraftfahrzeugs verstaut werden. Aufgrund des geringen Platzbedarfs des Staubehälters kann der Staubehälter in einer unauffälligen Weise verstaut werden, wirkt also nicht störend.

Eine vorteilhafte Weiterbildung der Erfindung sieht vor, dass der Deckel sich in einen ersten Abschnitt und einen zweiten Abschnitt unterteilt, wobei der zweite Abschnitt rohrförmig ist und an das Rohr grenzt, und die Warnweste sich zumindest teilweise über die Öffnung des zylinderförmigen Rohrs hinaus in den zweiten Abschnitt des Deckels erstreckt.

Die Warnweste befindet sich somit nicht vollständig innerhalb des Rohres. Bei Abnahme des Deckels steht zumindest ein kleiner Abschnitt der Warnweste aus dem Rohr hinaus. Dies erleichtert die Entnahme der Warnweste, insbesondere für den Fall, dass der Innenraum des Rohres und die Abmaße der Warnweste sehr genau aufeinander abgestimmt sind und Reibungskräfte zu überwinden sind.

Des Weiteren offenbart die Erfindung eine Staubehälteranordnung für ein Kraftfahrzeug mit einem erfindungsgemäßen Staubehälter und eine Halterung zur Aufnahme des Staubehälters.

Durch die Halterung wird der Staubehälter an einem fixen Punkt innerhalb des Kraftfahrzeugs, z.B. Kofferraum oder im Innenraum, gehalten.

Insbesondere kann die Halterung im Innenraum des Fahrzeugs oder im Kofferraum versenkt sein. Ein Staubehälter, der sich in der versenkten Halterung befindet, ist unauffällig und benötigt, wenn an geeigneten Stellen vorgesehen, keinen zusätzlichen Platz.

Bevorzugterweise ist die Halterung rohrförmig ausgebildet. Der Innendurchmesser der Halterung ist dabei an den Außendurchmesser des Staubehälters angepasst. Es wird dadurch ein Formschluss gebildet, so dass der Staubehälter sicher in der Halterung fixiert ist.

Eine vorteilhafte Weiterbildung der Erfindung sieht vor, dass der maximale Außendurchmesser des zweiten Abschnitts des Deckels größer oder gleich dem maximalen Außendurchmesser des Rohres ist, und der maximale Außendurchmesser des ersten Abschnitts des Deckels größer ist als der maximale Außendurchmesser des zweiten Abschnitts, und dass die Halterung zur Aufnahme des Staubehälters eine Öffnung zum Einführen oder Herausnehmen des Staubehälters aufweist, deren Durchmesser dem Außendurchmesser des zweiten Abschnitts des Deckels des Staubehälters entspricht.

Erfindungsgemäß ist es somit möglich, den Staubehälter, eine ausreichende Tiefe der Halterung vorausgesetzt, bis zum ersten Abschnitt des Deckels in der Halterung zu versenken. Der überwiegende Teil des Staubehälters befindet sich somit in der Halterung. Nur ein kleiner Teil des Staubehälters steht über die Öffnung der Halterung hinaus. Dies erlaubt es, den Staubehälter, obwohl fast vollständig versenkt, bequem aus der Halterung zu entnehmen.

Eine weitere vorteilhafte Weiterbildung der Erfindung sieht vor, dass die Staubehälteranordnung eine Fixiervorrichtung aufweist, mittels derer der Staubehälter in der Halterung fixierbar ist.

Die Fixiervorrichtung verhindert ein Lösen des Staubehälters aus der Halterung. Bevorzugterweise wird durch die Fixiervorrichtung der Staubehälter in der Halterung so fixiert, dass keine störenden Geräusche, wie beispielsweise ein Klappern, auftreten.

Eine weitere vorteilhafte Weiterbildung der Erfindung sieht vor, dass die Fixiervorrichtung ein Bajonettverschluss ist, der durch Deckel und Halterung ausgebildet ist.

Erfindungsgemäß ist der Staubehälter über seinen Deckel mit der Halterung fixiert. Durch Drehen des Deckels wird der Bajonettverschluss geöffnet. Der Staubehälter kann dann an seinem Deckel entnommen werden. Nach Entnahme des Staubehälters aus der Halterung kann der Staubehälter geöffnet werden, und die Warnweste aus dem Rohr des Staubehälters entnommen werden.

Eine weitere vorteilhafte Weiterbildung der Erfindung sieht vor, dass die Fixiervorrichtung ein Schraubverschluss ist, der durch Deckel und Halterung ausgebildet ist.

Durch ein Drehen des Deckels wird der Schraubverschluss gelöst. Nach Lösung des Verschlusses kann der Staubehälter an seinem Deckel aus der Halterung entnommen werden.

Des Weiteren wird eine Mittelkonsole mit einer erfindungsgemäßen Staubehälteranordnung offenbart.

Bevorzugterweise ist die Halterung mit dem Staubehälter in dem hinteren Abschnitt der Mittelkonsole eingerichtet. Dadurch ist die Warnweste schnell verfügbar. Vorteilhafterweise kann die Staubehälteranordnung von, falls in diesem Fahrzeugmodell vorgesehen, einer Armauflage verdeckt sein. Dadurch wirkt die Staubehälteranordnung nicht störend im Innenraumdesign des Fahrzeugs.

Die Erfindung wird nun anhand mehrerer Figuren erläutert. Dabei zeigen
- Fig. 1: eine Mittelkonsole mit einer Staubehälteranordnung mit entnommenem und geöffnetem Staubehälter,
- Fig. 2: die Mittelkonsole mit dem in der Mittelkonsole versenkten Staubehälter in einer Aufsicht,
- Fig. 3: die Mittelkonsole mit dem in der Mittelkonsole versenkten Staubehälter in einer Seitenansicht.

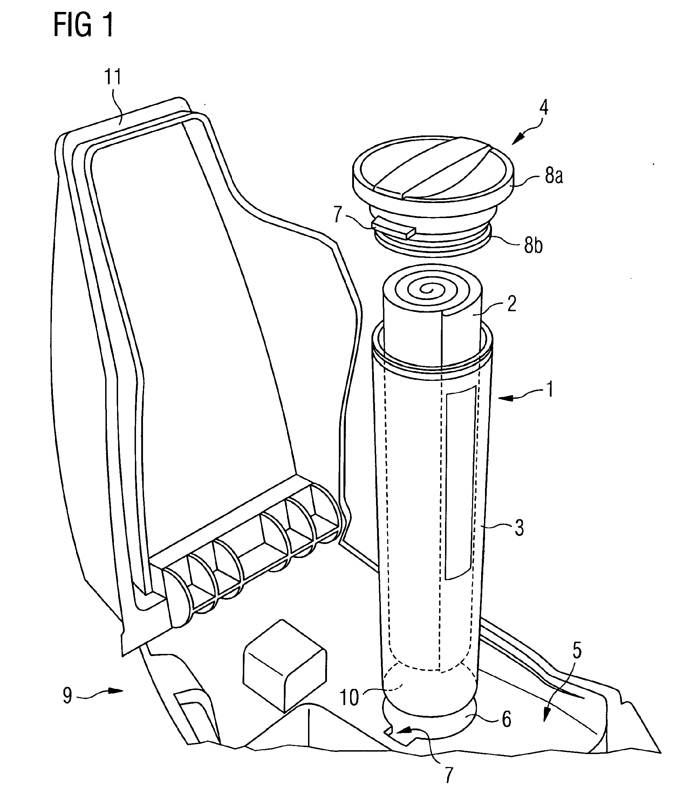

Fig. 1 zeigt eine Mittelkonsole 9 mit einer Staubehälteranordnung. Die Staubehälteranordnung beinhaltet einen Staubehälter 1 und eine Halterung 5. Dargestellt ist der entnommene und geöffnete Staubehälter 1.

Der Staubehälter umfasst ein an einer Seite mit einem Boden 10 abgeschlossenes Rohr 3, einen Deckel 4 und eine Warnweste 2, die sich innerhalb des Staubehälters 1 befindet. Die Warnweste 2 befindet sich in einem zusammengerollten Zustand zumindest teilweise innerhalb des Rohres 3.

Der Deckel 4 ist in einen ersten und in einen zweiten Abschnitt unterteilt. Beide Abschnitte sind im Wesentlichen zylinderförmig. Der Außendurchmesser des ersten Abschnitts 8a ist etwas größer als der Außendurchmesser des zweiten Abschnitts 8b.

Über dem zweiten Abschnitt 8b wird die Verbindung mit dem Rohr 3 hergestellt. Der Innendurchmesser des Öffnungsbereiches des Rohres 3 entspricht dem Außendurchmesser des Endbereiches des zweiten Abschnitts 8b des Deckels 4. Der Deckel 4 lässt sich somit teilweise in das Rohr 3 einstecken.

Im Öffnungsbereich des Rohres 3 ist innerhalb des Rohres ein flacher umlaufender Steg vorgesehen. Im Endbereich des zweiten Abschnitts 8b ist eine zu dem Steg korrespondierende Nut vorgesehen. Im zusammengesteckten Zustand von Deckel 4 und Rohr 3 greift der Steg des Rohrs 3 in die Nut des Deckels 4 ein, wodurch ein Formschluss hergestellt ist.

Das Rohr 3 ist elastisch. Aufgrund der Elastizität kann der Deckel 4 von dem Rohr 3 abgezogen bzw. aufgesetzt werden.

Der Innendurchmesser des Rohres 3 ist an den Umfang der zusammengerollten Warnweste 2 angepasst. Die Länge des Rohres 3 ist so gewählt, dass die Warnweste 2 etwas über die Öffnung des Rohres 3 hinaussteht. Im zusammengesetzten Zustand des Staubehälters 1 ragt somit die Warnweste 2 in den zweiten Abschnitt 8b des Deckels 4 hinein. Entsprechend ist der Innendurchmesser des zweiten Abschnitts 8b ist dabei ebenfalls an den Außendurchmesser der zusammengerollten Warnweste 2 angepasst. Der Innenraum des (geschlossenen) Staubehälters 1 wird somit nahezu vollständig durch die Warnweste 2 ausgefüllt.

Rohr 3 und Deckel 4 sind aus Polyethylen. Prinzipiell sind auch andere Materialien, so auch Metalle, geeignet.

Die Mittelkonsole 9 besitzt in ihren hinteren Abschnitt eine Armlehne 11. Die Armlehne 11 ist aufklappbar. Unterhalb der Armlehne 11 befindet sich die Halterung 5 für die Aufnahme des Staubehälters 1.

Die Halterung 5 weist eine Öffnung 6 auf. Der Durchmesser der Öffnung 6 ist größer als der Außendurchmesser des Rohres 3 und des zweiten Abschnitts 8b des Deckels 4, aber kleiner als der Außendurchmesser des ersten Abschnitts 8a des Deckels 4.

Ist der Staubehälter 1 in der Halterung 5 eingesetzt, so befindet sich ausschließlich der erste Abschnitt 8a des Deckels 4 oberhalb der Öffnung 6 der Halterung 5. Die Armauflage 11 der Mittelkonsole 9 kann dann geschlossen werden. Die Staubehälteranordnung ist in diesem Zustand nicht mehr sichtbar.

Der Staubehälter 1 ist in der Halterung 5 mittels einer Fixiervorrichtung 7 fixierbar. In diesem Ausführungsbeispiel ist die Fixiervorrichtung als Bajonettverschluss ausgebildet. Am zweiten Abschnitt 8b des Deckels 4 befinden sich diesbezüglich mehrere Laschen, die Öffnung 6 der Halterung 5 besitzt dementsprechend Aussparungen. Weitere Details sind allerdings in der Zeichnung nicht sichtbar.

Durch die Fixiervorrichtung 7 wird der in die Halterung 5 eingesetzte Staubehälter 1 in einer festen Position gehalten.

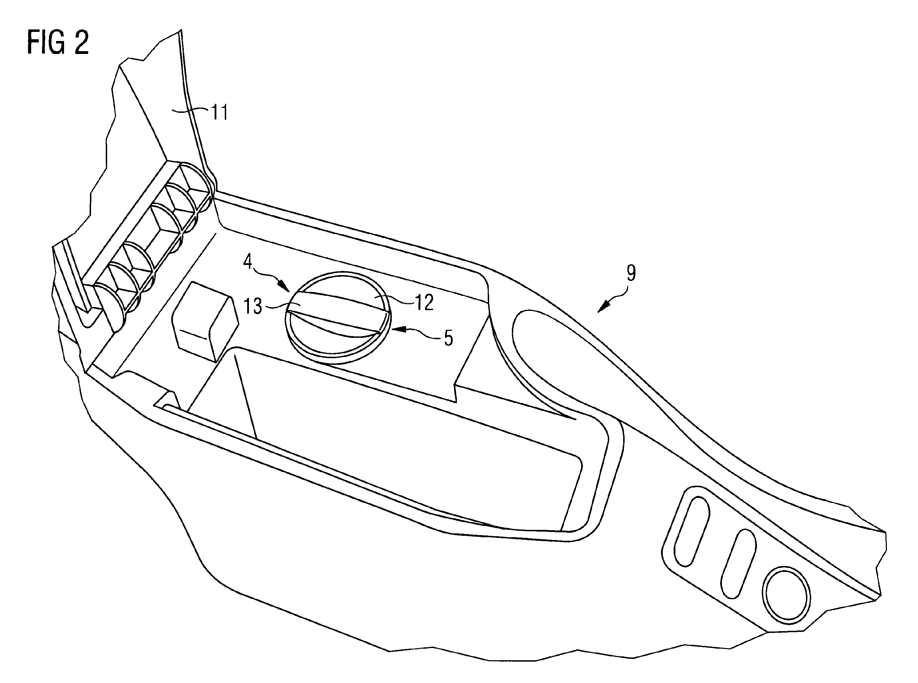

Fig. 2 zeigt den in die Halterung 5 eingesetzten Staubehälter 1. Von außen sichtbar ist nur der Deckel 4 des Staubehälters 1.

Der Staubehälter 1 ist durch den vom Deckel 4 und der Halterung 5 gebildeten Bajonettverschluss in der Halterung 5 fixiert. Durch Drehen des Deckels 4 kann dieser Bajonettverschluss gelöst werden. Um das Drehen des Deckels zu erleichtern, besitzt der Deckel an seiner Oberfläche eine Mulde 12, in der sich Griff 13 befindet. Durch den Griff 13 wird es ermöglicht, den Deckel 4 zu drehen, somit den Bajonettverschluss zu lösen, und den Staubehälter 1 aus der Halterung 5 zu entnehmen.

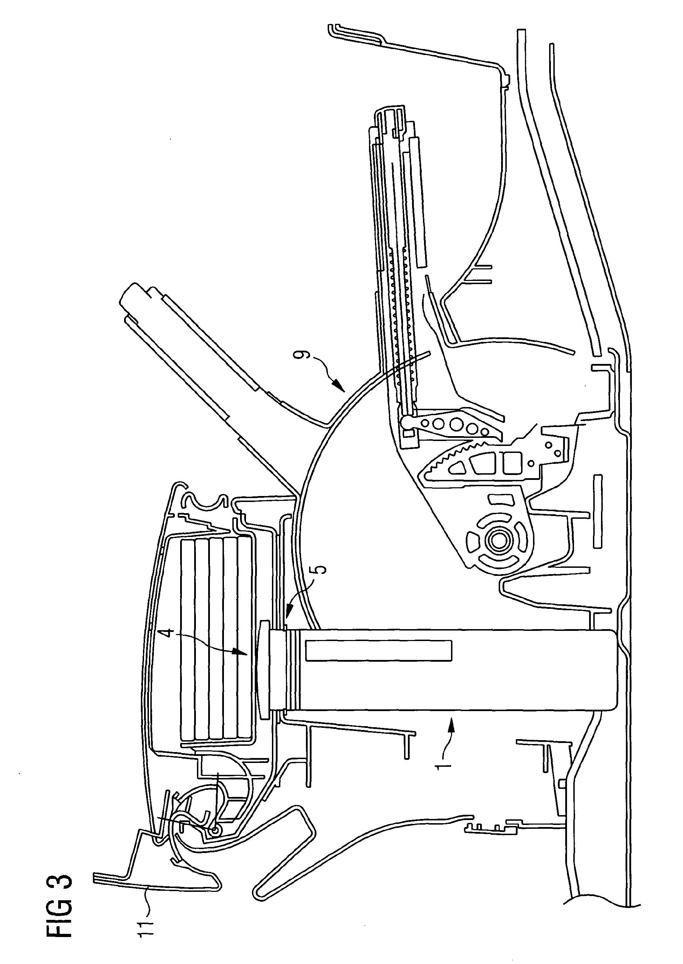

Fig. 3 zeigt eine Seitenansicht des sich in der Halterung 5 befindenden Staubehälters 1. Die Halterung 5 ist ausreichend tief, damit der Staubehälter 1 bis zum Aufliegen des ersten Abschnitts 8a des Deckels 4 auf der Öffnung 6 der Halterung 5 in die Halterung 5 eingeführt werden kann.

## Patentansprüche

1. Staubehälter (1) mit einer Warnweste (2), der ein zylinderförmiges, an einer Seite mit einem Boden (10) abgeschlossenes Rohr (3) und einen mit dem Rohr (3) verbundenen, die Öffnung des Rohres (3) verschließenden abnehmbaren Deckel (4) aufweist, und die Warnweste (2) sich in einem zusammengerollten Zustand zumindest teilweise innerhalb des Rohres (3) befindet.

2. Staubehälter (1) mit Warnweste (2) nach Anspruch 1, **dadurch gekennzeichnet, dass** der Deckel (4) sich in einen ersten Abschnitt (8a) und einen zweiten Abschnitt (8b) unterteilt, wobei der zweite Abschnitt (8b) rohrförmig ist und an das Rohr (3) grenzt, und die Warnweste (2) sich zumindest teilweise über die Öffnung des zylinderförmigen Rohrs (3) hinaus in den zweiten Abschnitt (8b) des Deckels (4) erstreckt.

3. Staubehälteranordnung für ein Kraftfahrzeug mit einem Staubehälter (1) nach einem der Ansprüche 1 bis 2 und einer Halterung (5) zur Aufnahme des Staubehälters (1).

4. Staubehälteranordnung nach Anspruch 3, **dadurch gekennzeichnet, dass** der maximale Außendurchmesser des zweiten Abschnitts (8b) des Deckels (4) größer oder gleich dem maximalen Außendurchmesser des Rohres (3) ist, und der maximale Außendurchmesser des ersten Abschnitts (8a) des Deckels größer ist als der maximale Außendurchmesser des zweiten Abschnittes (8b), und dass die Halterung (5) zur Aufnahme des Staubehälters eine Öffnung (6) zum Einführen oder Herausnehmen des Staubehälters (1) aufweist, deren Durchmesser dem Außendurchmesser des zweiten Abschnitts (8b) des Deckels (4) des Staubehälters (1) entspricht.

5. Staubehälteranordnung nach einem der Ansprüche 3 bis 4, **dadurch gekennzeichnet, dass** die Staubehälteranordnung eine Fixiervorrichtung (7) aufweist, mittels derer der Staubehälter (1) in der Halterung fixierbar ist.

6. Staubehälteranordnung nach Anspruch 5, **dadurch gekennzeichnet, dass** die Fixiervorrichtung (7) ein Bajonettverschluss ist, der durch Deckel (4) und Halterung (5) ausgebildet ist.

7. Staubehälteranordnung nach Anspruch 5, **dadurch gekennzeichnet, dass** die Fixiervorrichtung (7) ein Schraubverschluss ist, der durch Deckel (4) und Halterung (5) ausgebildet ist.

8. Mittelkonsole (9) mit einer Staubehälteranordnung nach einem der Ansprüche 3 bis 7.
